# EUROPÄISCHE PATENTSCHRIFT

(11) **EP 0 962 084 B1**
(45) Veröffentlichungstag und Bekanntmachung des Hinweises auf die Patenterteilung: **17.08.2005**
(21) Anmeldenummer: 98914781.4
(22) Anmeldetag: 18.02.1998
(51) Int. Cl.: H04M 1/00

(54) **FUNKGERÄT**
RADIO APPARATUS
APPAREIL RADIOTELEPHONIQUE

(30) Priorität: 20.02.1997 DE 19706595
(43) Veröffentlichungstag der Anmeldung: 08.12.1999
(73) Patentinhaber: ROBERT BOSCH GMBH, 70442 Stuttgart (DE)
(72) Erfinder: WEIDNER, Wolfgang, D-61348 Bad Homburg (DE); MURGAS, Hans, D-61462 Königstein (DE); KLEIN, Bernt, D-65812 Bad Soden (DE)
(86) Internationale Anmeldenummer: PCT/DE1998/000482
(87) Internationale Veröffentlichungsnummer: WO 1998/037681

(56) Entgegenhaltungen:
- EP-A- 0 470 403
- EP-A- 0 633 684
- EP-A- 0 731 590
- WO-A-97/29582
- CH-A- 686 541
- ANDREASEN L ET AL: "ADSI: THE DAWN OF A NEW AGE OF INTERACTIVE SERVICES" TELESIS, Nr. 97, Dezember 1993, Seiten 35-50, XP000616855

## Beschreibung

### Stand der Technik

Die Erfindung geht von einem Funkgerät nach der Gattung des Hauptanspruchs aus. Aus den Dokumenten EP-A-0 633 684, CH-A-0 686 541 und EP-A-0 731 590 sind bereits Funkgeräte bekannt, welche gemäß den Merkmalen des Oberbegriffs des Anspruchs 1 aufgebaut sind.

Aus der noch nicht vorveröffentlichten deutschen Patentanmeldung mit dem Aktenzeichen 1 96 05 373.0 ist bereits ein schnurloses Telefon mit einer Anzeigevorrichtung bekannt.

### Vorteile der Erfindung

Das erfindungsgemäße Funkgerät mit den Merkmalen des Hauptanspruchs hat demgegenüber den Vorteil, daß mindestens ein Bedienelement zur Auswahl und/oder Aktivierung von an der Anzeigevorrichtung darstellbaren Funktionen des Funkgerätes vorgesehen ist und daß das mindestens eine Bedienelement in vorzugsweise unmittelbarer Nähe der Anzeigevorrichtung angeordnet ist, so daß eine örtliche Zuordnung zwischen dem mindestens einen Bedienelement und der Darstellung der Funktionen des Funkgerätes an der Anzeigevorrichtung besteht. Das erfindungsgemäße Funkgerät ist dadurch gekenzeichnet, daß mindestens ein erster Betriebsmodus vorgesehen ist, in dem dem mindestens einen Bedienelement eine Information über diesen Betriebsmodus an der Anzeigevorrichtung zugeordnet ist, und daß die Information in einem dem ersten Betriebsmodus zugeordneten zweiten Betriebsmodus in eine durch das mindestens eine Bedienelement betätigbare Funktion zur Aktivierung des ersten Betriebsmodus umgewandelt wird. Auf diese Weise wird die Bedienung und Übersichtlichkeit für den Benutzer erheblich vereinfacht und verbessert. Die Bedienung wird dadurch außerdem schneller und sicherer.

Durch die in den Unteransprüchen aufgeführten Maßnahmen sind vorteilhafte Weiterbildungen und Verbesserungen des im Hauptanspruch angegebenen Funkgerätes möglich.

Vorteilhaft ist es, daß zwischen dem mindestens einen Bedienelement und der Darstellung der zugeordneten Funktionen des Funkgerätes an der Anzeigevorrichtung vorzugsweise pfeilförmige Grafiksymbole an der Anzeigevorrichtung darstellbar sind. Auf diese Weise wird die örtliche Zuordnung des mindestens einen Bedienelementes zur Darstellung der zugeordneten Funktionen weiter verbessert und die Übersichtlichkeit für den Benutzer erhöht.

Vorteilhaft ist dabei insbesondere die Beleuchtbarkeit des mindestens einen Bedienelements. Dadurch ist vor allem auch bei Dunkelheit eine einfache, sichere und schnelle Bedienung möglich.

Vorteilhaft ist auch, daß das mindestens eine Bedienelement von dem Bedienfeld abgesetzt ist. Auf diese Weise werden Tasten im Bedienfeld eingespart und das Bedienfeld dadurch für den Benutzer übersichtlicher und einfacher in der Bedienung, so daß der Bedienkomfort erhöht wird.

Vorteilhaft ist weiterhin, daß das mindestens eine Bedienelement in vorzugsweise unmittelbarer Nähe des Randbereichs der Gehäuseoberfläche des Funkgerätes angeordnet ist. Auf diese Weise ist das mindestens eine Bedienelement für den Benutzer besser zugänglich, so daß auch eine Bedienung des mindestens einen Bedienelementes mit den Fingern der das Funkgerät haltenden Hand möglich ist. Eine entsprechende Bedienung des Funkgerätes ist also auch einhändig möglich.

### Zeichnung

Ausführungsbeispiele der Erfindung sind in der Zeichnung dargestellt und in der nachfolgenden Beschreibung näher erläutert. Es zeigen Figur 1 eine Vorderansicht eines Mobilfunkgerätes und die Figuren 2 bis 9 jeweils ein Beispiel für eine Zuordnung von auf der Anzeigevorrichtung dargestellten Menüunterpunkten zu entsprechenden Bedienelementen und Figur 10 die Darstellung eines Grundmenüs zur Bedienerführung an einer Anzeigevorrichtung des Funkgerätes.

### Beschreibung der Ausführungsbeispiele

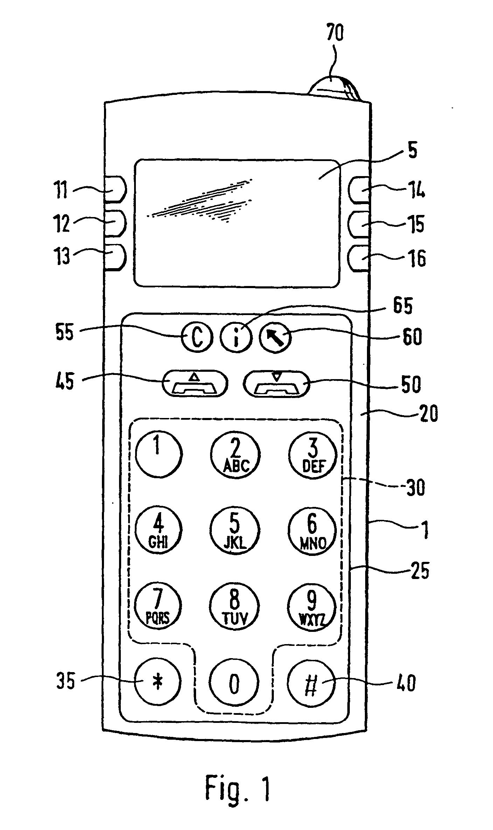

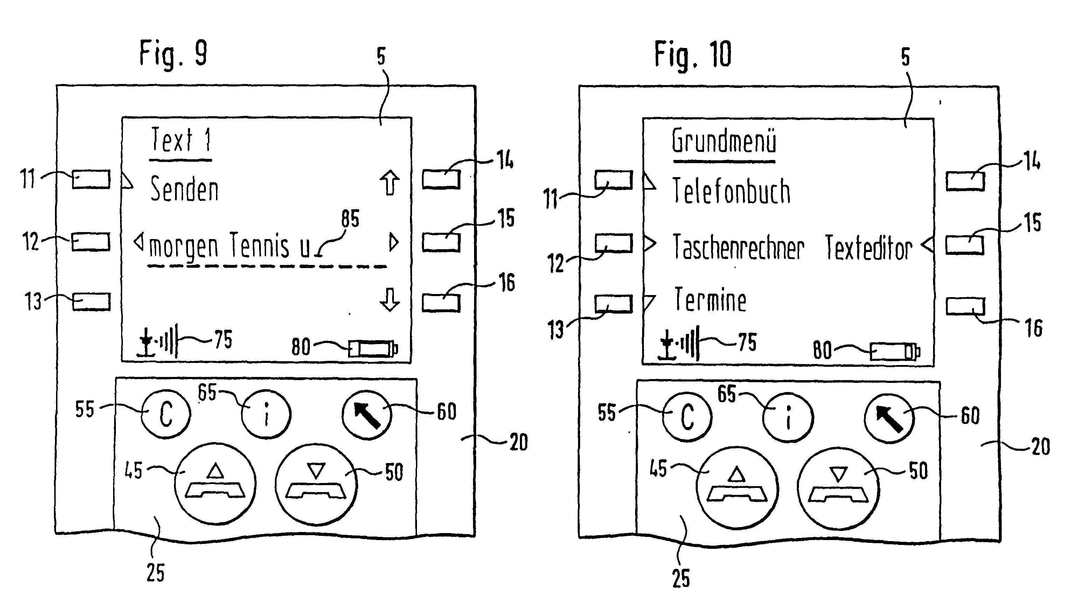

In Figur 1 kennzeichnet 1 ein als Funktelefon ausgebildetes Funkgerät, das beispielsweise als Mobiltelefon oder als Schnurlostelefon ausgebildet sein kann. Das Funkgerät 1 weist an seiner Gehäuseoberfläche 20 ein Bedienfeld 25 mit einer alphanumerischen Zehnertastatur 30, einer Sterntaste 35 und einer Rautentaste 40 auf. Das Bedienfeld 25 umfaßt ferner eine erste Gabelkontakttaste 45 zur Annahme eines ankommenden Rufes bzw. zur Schleifenbelegung und eine zweite Gabelkontakttaste 50 zur Beendigung eines Gesprächszustandes bzw. zur Schleifenfreigabe. Diese beiden Funktionen können auch durch eine einzige Taste realisiert sein. Das Bedienfeld 25 umfaßt weiterhin eine Grundzustandstaste 55 zur Aktivierung der Darstellung eines Grundbedienmenüs an einer oberhalb des Bedienfeldes 25 an der Gehäuseoberfläche 20 angeordneten Anzeigevorrichtung 5. Das Bedienfeld 25 umfaßt außerdem eine Informationstaste 65, durch deren Betätigung an der Anzeigevorrichtung 5 ein Informationstext zu einem aktuell eingestellten Menüpunkt dargestellt wird. Durch Betätigung einer ebenfalls im Bedienfeld 25 angeordneten Rücksprungtaste 60 wird der zuletzt durchgeführte Bedienvorgang rückgängig gemacht, d. h. beispielsweise die zuletzt eingegebene Ziffer für die Wahl eines zu rufenden Teilnehmers gelöscht, von der Darstellung eines Informationstextes zum aktuell eingestellten Menüpunkt an der Anzeigevorrichtung 5 auf die Darstellung des aktuell eingestellten Menüpunktes an der Anzeigevorrichtung 5 zurückgeschaltet oder dergleichen. Die Anzeigevorrichtung 5 ist im wesentlichen rechteckförmig ausgebildet, wobei die eine der beiden Längsseiten dem Bedienfeld 25 und die andere Längsseite einer Antenne 70 an der Oberkante des Funkgerätes 1 zugewandt ist. Zwischen der linken Schmalseite und dem linken Rand der Gehäuseoberfläche 20 sind an der Gehäuseoberfläche 20 entlang dieser Schmalseite ein erstes Bedienelement 11, ein zweites Bedienelement 12 und ein drittes Bedienelement 13 angeordnet. Zwischen der rechten Schmalseite der Anzeigevorrichtung 5 und dem rechten Rand der Gehäuseoberfläche 20 sind entlang dieser Schmalseite ein viertes Bedienelement 14, ein fünftes Bedienelement 15 und ein sechstes Bedienelement 16 angeordnet. Dabei sind die sechs Bedienelemente 11, ..., 16 so in ihren Abmessungen dimensioniert, daß sie sowohl in unmittelbarer Nähe der Anzeigevorrichtung 5 als auch in unmittelbarer Nähe des Randbereichs der Gehäuseoberfläche 20 des Funkgerätes 1 angeordnet sind. Auf diese Weise lassen sich die Bedienelemente 11, ..., 16 direkt örtlich an der Anzeigevorrichtung 5 darstellbaren Funktionen des Funkgerätes 1 zuordnen und ermöglichen gleichzeitig eine einhändige Bedienung seitens des Benutzers mit den Fingern der Hand, die auch das Funkgerät 1 hält. Mittels der Bedienelemente 11, ..., 16 lassen sich die örtlich direkt zugeordneten Funktionen, die an der Anzeigevorrichtung 5 dargestellt sind, auswählen und/oder aktivieren. Die Bedienelemente 11, ..., 16 sind aufgrund ihrer Anordnung an den beiden Schmalseiten der Anzeigevorrichtung 5 vom Bedienfeld 25 abgesetzt. In Figur 10 ist an der Anzeigevorrichtung 5 das Grundmenü zur Bedienerführung dargestellt. Gemäß dem hier beschriebenen Ausführungsbeispiel umfaßt das Grundmenü als Menüunterpunkte eine Telefonbuchfunktion, eine Taschenrechnerfunktion, eine Terminfunktion und eine Texteditorfunktion. Dabei ist das erste Bedienelement 11 örtlich der Darstellung der Telefonbuchfunktion, das zweite Bedienelement 12 örtlich der Darstellung der Taschenrechnerfunktion, das dritte Bedienelement 13 örtlich der Darstellung der Terminfunktion und das fünfte Bedienelement 15 örtlich der Darstellung der Texteditorfunktion zugeordnet: Die örtliche Zuordnung wird durch pfeilförmige Grafiksymbole unterstützt, die zwischen den entsprechenden Bedienelementen 11, 12, 13, 15 und der Darstellung der zugeordneten Funktionen des Funkgerätes 1 an der Anzeigevorrichtung 5 darstellbar sind. Dem vierten Bedienelement 14 und dem sechsten Bedienelement 16 sind dabei keine Funktionen zugewiesen. Bei mehr als sechs wählbaren Menüunterpunkten können einzelne Bedienelemente auch zur Umschaltung auf bislang nicht sichtbare Funktionen des Grundmenüs verwendet werden. Ferner enthält die Anzeigevorrichtung 5 ein erstes Symbol 75 zur Darstellung der Empfangsqualität mittels der Anzahl von von einem stilisierten Funkturm abgesetzten, die Abstrahlung eines Sendesignals andeutenden Längsstreifen und ein zweites Symbol 80 zur Darstellung des Ladezustandes des Akkumulators des Funkgerätes 1.

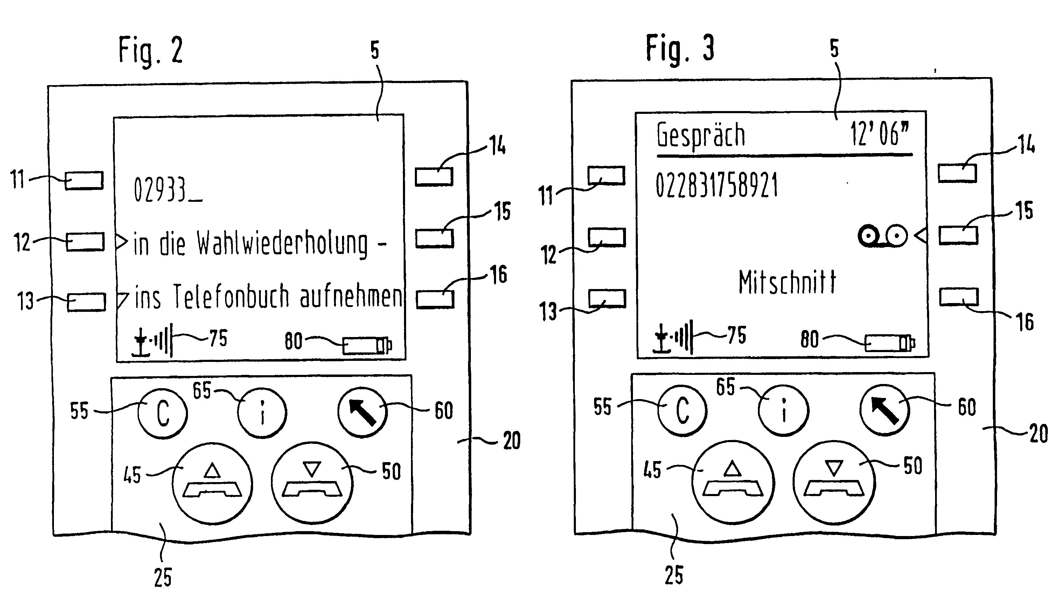

Durch Eingabe einer Rufnummer mittels der alphanumerischen Zehnertastatur 30 wird das Grundmenü bzw. die gerade aktuelle Darstellung der Anzeigevorrichtung 5 durch die Darstellung der eingegebenen Rufnummer gemäß Figur 2 ersetzt, wobei die eingegebene Rufnummer einen Menüoberpunkt bildet, für den zwei Menüunterpunkte ebenfalls an der Anzeigevorrichtung 5 dargestellt werden. So ist dem zweiten Bedienelement 12 als Menüunterpunkt die Funktion zugeordnet, die eingegebene Rufnummer in die Wahlwiederholung zu nehmen, und dem dritten Bedienelement 13 ist als Menüunterpunkt die Funktion zugeordnet, die eingegebene Rufnummer in einen Telefonnummernspeicher des Funkgerätes 1 aufzunehmen. Durch Betätigung des zweiten Bedienelementes 12 wird die entsprechende Funktion aktiviert und eine Wahlwiederholung mit der eingegebenen Rufnummer durchgeführt. Bei Betätigung des dritten Bedienelementes 13 wird ebenfalls die entsprechende Funktion aktiviert und die eingegebene Rufnummer in den Telefonnummernspeicher aufgenommen.

Bei Entgegennahme des Rufes seitens des über das Funkgerät 1 angewählten Teilnehmers oder bei Entgegennahme eines ankommenden Rufes durch Betätigung der ersten Gabelkontakttaste 45 wird die gerade aktuelle Darstellung an der Anzeigevorrichtung 5 verlassen und eine den Gesprächszustand kennzeichnende Bedienoberfläche an der Anzeigevorrichtung 5 gemäß Figur 3 dargestellt. Als Menüoberpunkt ist dabei das Wort "Gespräch" und die Dauer des Gesprächs eingeblendet. Außerdem ist die Rufnummer und gegebenenfalls der Name des vom Funkgerät 1 aus angerufenen bzw. des rufenden Gesprächsteilnehmers dargestellt. Dem fünften Bedienelement 15 ist eine Mitschnittfunktion zugeordnet, so daß durch Betätigung des fünften Bedienelementes 15 ein Mitschnitt des aktuellen Gesprächs erfolgt.

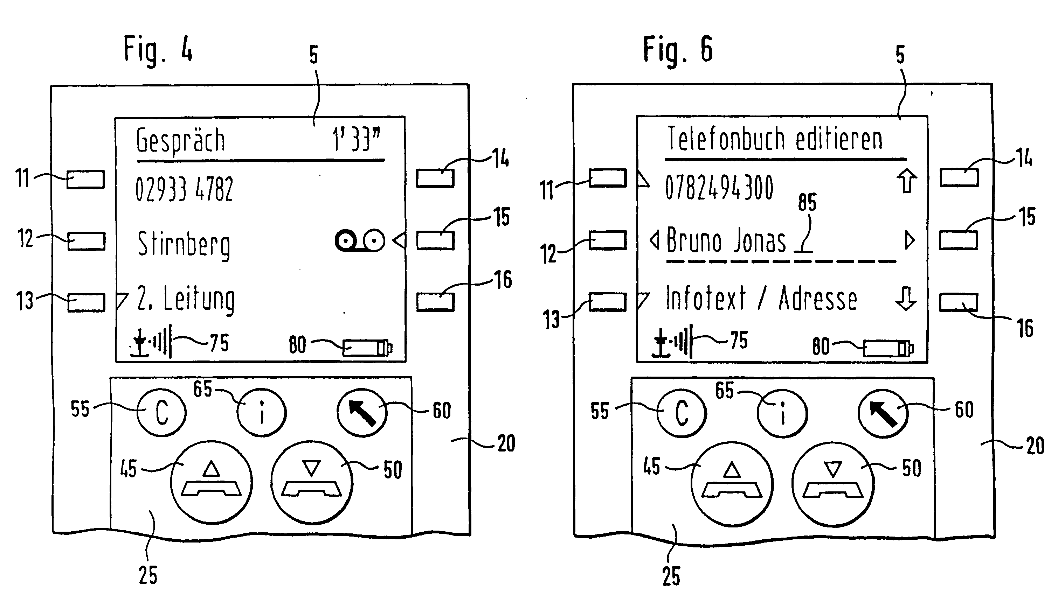

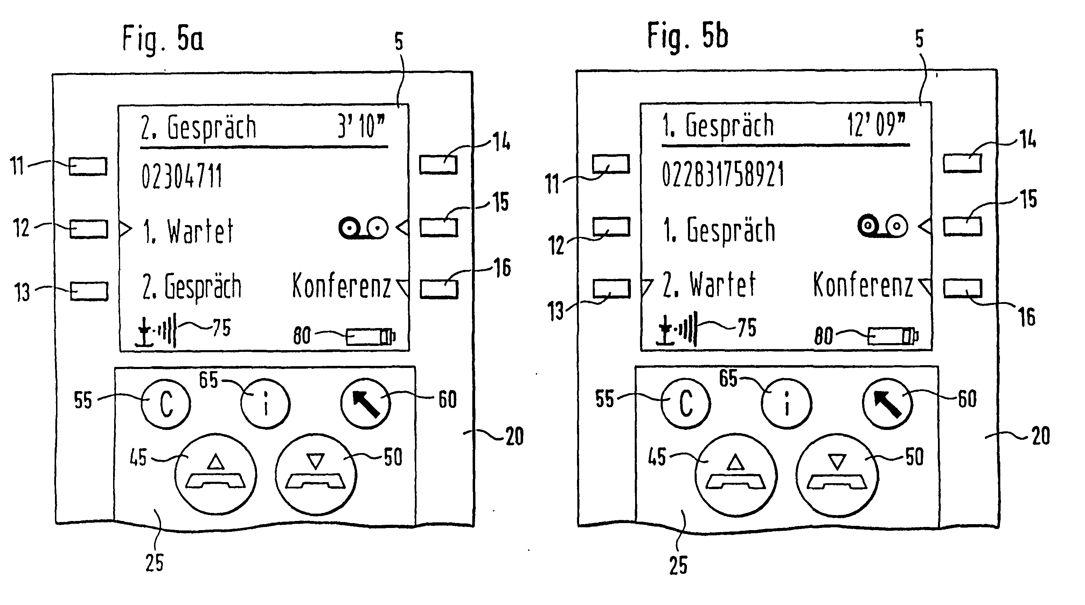

Ausgehend vom Ausführungsbeispiel gemäß Figur 3 kann gemäß Figur 4 der an der Anzeigevorrichtung 5 dargestellten Rufnummer des Gesprächsteilnehmers im Funkgerät 1 ein Name zugeordnet werden, der ebenfalls an der Anzeigevorrichtung 5 dargestellt wird. Erreicht das Funkgerät 1 während des Gesprächs ein Ruf von einem dritten Teilnehmer, so kann dies aufgrund digitaler Vermittlungstechnik ebenfalls an der Anzeigevorrichtung 5 dargestellt werden. Dem dritten Bedienelement 13 wird dann als Menüunterpunkt eine Funktion zugeordnet, durch die bei Betätigung des dritten Bedienelementes 13 bei Aufrechterhaltung der ursprünglichen Gesprächsverbindung die Annahme des zwischenzeitlich eingetroffenen Rufes erfolgt. Auf diese Weise können zwei Gesprächsverbindungen gleichzeitig eingerichtet werden. Nach Annahme des zweiten Gespräches durch Betätigung des dritten Bedienelementes 13 wird daher ausgehend von der Bedienoberfläche gemäß Figur 4 eine Ergänzung der Bedienoberfläche gemäß Figur 5 durchgeführt. Dabei wird als Menüoberpunkt das aktuell geführte Gespräch, dessen Dauer und die Rufnummer des zugehörigen Gesprächsteilnehmers eingeblendet. Gemäß Figur 5a) handelt es sich dabei um das während des ursprünglichen Gesprächs angenommene zweite Gespräch. Dem zweiten Bedienelement 12 ist als Funktion die Übernahme des ersten Gespräches zugeordnet, die bei Betätigung des zweiten Bedienelementes 12 erfolgt. Dem dritten Bedienelement 13 ist in diesem Falle keine Funktion, sondern lediglich die Information zugeordnet, daß aktuell das zweite Gespräch geführt wird. Bei dem sechsten Bedienelement 16 ist als Funktion eine Konferenzschaltung zugeordnet, so daß bei Betätigung des sechsten Bedienelementes 16 eine Konferenzschaltung zwischen allen drei Teilnehmern realisiert wird. Die dem fünften Bedienelement 15 zugeordnete Mitschnittfunktion ist nach wie vor wie auch in Figur 4 und Figur 3 vorhanden.

Gemäß Figur 5b) ist die Bedienoberfläche an der Anzeigevorrichtung 5 dargestellt, die sich nach dem Umschalten vom zweiten Gespräch durch Betätigung des zweiten Bedienelementes 12 auf das ursprüngliche Gespräch ergibt.

Als Mentioberpunkt wird dann als aktuelles Gespräch das erste Gespräch, dessen Dauer und die Rufnummer des zugehörigen Gesprächsteilnehmers eingeblendet. Nun ist dem dritten Bedienelement 13 als Funktion die Übernahme des zweiten Gespräches zugeordnet, die bei Betätigung des dritten Bedienelementes 13 erfolgt. Dem zweiten Bedienelement 12 ist nun lediglich die Information zugeordnet, daß das ursprüngliche Gespräch geführt wird, so daß bei Betätigung des zweiten Bedienelementes 12 keine Funktion aktiviert wird. Die Mitschnitt- und die Konferenzschaltungsfunktion ist in Figur 5b) wie in Figur 5a) realisiert.

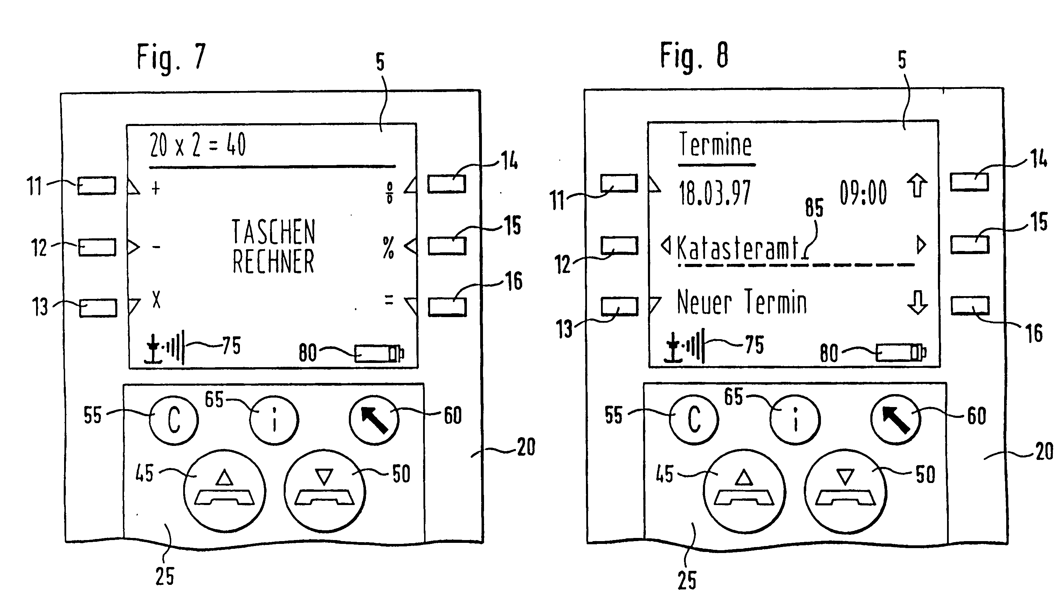

Wird bei Darstellung des Grundmenüs gemäß Figur 10 das erste Bedienelement 11 betätigt, so wird als Menüunterpunkt die Telefonbuchfunktion ausgewählt und als neuer Menüoberpunkt an der Anzeigevorrichtung 5 gemäß Figur 6 dargestellt. Als Menüunterpunkt für die Telefonbuchfunktion wird dabei ein Eintrag des Telefonnummernspeichers an der Anzeigevorrichtung 5 dargestellt. Dieser Eintrag umfaßt gemäß dem Ausführungsbeispiel in Figur 6 Vor- und Nachnamen eines Telefonteilnehmers. Dabei ist dem vierten Bedienelement 14 mittels eines nach oben zeigenden Pfeils an der Anzeigevorrichtung 5 die Funktion zugeordnet, innerhalb des Telefonnummernspeichers in Richtung zum Anfang des Alphabets hin den nächsten Teilnehmer auszuwählen und an der Anzeigevorrichtung 5 zur Darstellung zu bringen. Dem sechsten Bedienelement 16 ist mittels eines nach unten zeigenden Pfeils an der Anzeigevorrichtung 5 die Funktion zugeordnet, im Telefonnummernspeicher in Richtung zum Ende des Alphabetes hin den nächsten Teilnehmer auszuwählen und zur Darstellung an der Anzeigevorrichtung 5 zu bringen. Über das erste Bedienelement 11 wird die Rufnummer des an der Anzeigevorrichtung 5 aktuell dargestellten Telefonteilnehmers aus dem Telefonnummernspeicher angewählt. Dabei ist diese Rufnummer dem ersten Bedienelement 11 sichtbar zugeordnet. Über das dritte Bedienelement 13 sind weitere Informationen über den aktuell an der Anzeigevorrichtung 5 dargestellten Telefonteilnehmer aus dem Telefonnummernspeicher auswählbar, die beispielsweise auch die Adresse dieses Telefonteilnehmers umfassen können.

Wird bei Darstellung des Grundmenüs an der Anzeigevorrichtung 5 gemäß Figur 10 das zweite Bedienelement 12 betätigt, so wird der Menüunterpunkt "Taschenrechner" ausgewählt und auf eine neue Bedienoberfläche gemäß Figur 7 umgeschaltet, die als neuen Menüoberpunkt die Taschenrechnerfunktion darstellt. Dabei ist dem ersten Bedienelement 11 eine Additionsfunktion, dem zweiten Bedienelement 12 eine Subtraktionsfunktion, dem dritten Bedienelement 13 eine Multiplikationsfunktion, dem vierten Bedienelement 14 eine Divisionsfunktion, dem fünften Bedienelement 15 eine Prozentfunktion und dem sechsten Bedienelement 16 eine Resultatfunktion zugeordnet. Die Zahleneingabe erfolgt dabei über die alphanumerische Zehnertastatur 30. Ein aktuell durchgeführter Rechenvorgang wird ebenfalls an der Anzeigevorrichtung 5 dargestellt.

Wird aus dem an der Anzeigevorrichtung 5 dargestellten Grundmenü gemäß Figur 10 durch Betätigung des dritten Bedienelementes 13 die Terminfunktion als Menüunterpunkt ausgewählt, so erscheint die Terminfunktion als neuer Menüoberpunkt einer neuen Bedienoberfläche an der Anzeigevorrichtung 5 gemäß Figur 8. Weiterhin wird an der neuen Bedienoberfläche an der Anzeigevorrichtung 5 ein Eintrag aus einem Terminspeicher des Funkgerätes 1 als Kennzeichnung des entsprechenden Termins dargestellt. Dabei wird dem Termin ein Name zugeordnet. Über das vierte Bedienelement 14, dem ein nach oben gerichteter Pfeil in der Anzeigevorrichtung 5 zugeordnet ist, kann der nächstfrühere Termineintrag aus dem Terminspeicher ausgewählt und zur Darstellung an der Anzeigevorrichtung 5 gebracht werden. Über das sechste Bedienelement 16, dem ein nach unten gerichteter Pfeil an der Anzeigevorrichtung 5 zugeordnet ist, kann der nächstspätere Eintrag des Terminspeichers ausgewählt und an der Anzeigevorrichtung 5 zur Darstellung gebracht werden. Analog zur Telefonbuchfunktion ist natürlich auch eine andere als die alphabetische Reihenfolge denkbar, beispielsweise nach Anzahl der Buchstaben oder dergleichen. Dem ersten Bedienelement 11 ist der zu dem aktuell an der Anzeigevorrichtung 5 dargestellten Termin zugehörige Termin in Form des Datums und der Uhrzeit zugeordnet. Bei Betätigung des ersten Bedienelementes 11 wird dieser Termin als Menüunterpunkt ausgewählt und als neuer Menüoberpunkt in einer neuen Bedienoberfläche an der Anzeigevorrichtung 5 dargestellt, die eine Änderung dieses Termins ermöglicht. Bei Betätigung des dritten Bedienelementes 13 wird die Funktion "neuer Termin" ausgewählt und erscheint ebenfalls mittels einer neuen Bedienoberfläche als neuer Menüoberpunkt, wobei die neue Bedienoberfläche an der Anzeigevorrichtung 5 dann die Eingabe eines neuen Termins, beispielsweise ausgehend von einer Nullstellung, ermöglicht.

Die Eingabe eines Namens bei der gewählten Telefonbuchfunktion gemäß Figur 6 bzw. der gewählten Terminfunktion gemäß Figur 8 erfolgt mittels der alphanumerischen Zehnertastatur 30, wobei an der Anzeigevorrichtung 5 eine einzeilige Darstellung dieser Eingabe erfolgt. Die aktuelle Eingabe erfolgt dabei immer an einer Position dieser dargestellten Zeile, die durch ein Blinkzeichen 85 gekennzeichnet ist. Die Position des Blinkzeichens 85 kann dabei jeweils mittels des zweiten Bedienelementes 12 nach links bzw. mittels des fünften Bedienelementes 15 nach rechts in dieser Zeile verschoben werden, was durch den entsprechenden Bedienelementen 12, 15 zugeordnete Pfeilrichtungen an der Anzeigevorrichtung 5 graphisch verdeutlicht wird.

Dasselbe gilt auch für die Eingabe von Text an einer Texteditorbedienoberfläche an der Anzeigevorrichtung 5, nach Auswahl des entsprechenden Menüunterpunktes mittels des fünften Bedienelementes 15 am Grundmenü gemäß Figur 10. Die Texteditorbedienoberfläche an der Anzeigevorrichtung 5 ist in Figur 9 dargestellt. Weitere Texte können bei der Texteditorfunktion gemäß Figur 9 durch Betätigung des vierten Bedienelementes 14 bzw. des sechsten Bedienelementes 16 aus einem Textspeicher des Funkgerätes 1 ausgewählt und zur Darstellung an der Anzeigevorrichtung 5 gebracht werden. Dem vierten Bedienelement 14 ist dabei ein nach oben gerichteter Pfeil an der Anzeigevorrichtung 5 zugeordnet, und dem sechsten Bedienelement 16 ist an der Anzeigevorrichtung 5 ein nach unten gerichteter Pfeil zugeordnet. Bei Betätigung des vierten Bedienelementes 14 wird der Textspeicher zur Auswahl eines gespeicherten Textes in einer ersten Richtung beispielsweise zum Anfang des Alphabets hin durchlaufen. Bei Betätigung des sechsten Bedienelementes 16 wird der Textspeicher zur Auswahl eines gespeicherten Textes in einer zweiten Richtung durchlaufen, die der ersten Richtung entgegengesetzt ist, beispielsweise zum Ende des Alphabets hin. Bei Betätigung des ersten Bedienelementes 11 wird eine Sendefunktion aufgerufen, wobei dann eine neue Bedienoberfläche zur Eingabe des gewünschten Empfängers bzw. dessen Rufnummer an der Anzeigevorrichtung 5 dargestellt wird.

Die Erfindung ist nicht auf die beschriebenen Ausführungsbeispiele beschränkt. Vielmehr sind beliebige andere Bedienoberflächen denkbar, bei denen Bedienelemente 11, ..., 16 in analoger Weise vorzugsweise unter Verwendung pfeilförmiger Grafiksymbole zur verbesserten Zuordnung an der Anzeigevorrichtung 5 entsprechenden Darstellungen von Funktionen des Funkgerätes 1 an der Anzeigevorrichtung 5 örtlich zugeordnet sind. Diese Darstellungen können dabei zur verbesserten Zuordnung zusätzlich farblich hinterlegt sein. Die Bedienelemente 11, ..., 16 können auch beleuchtbar ausgeführt sein. Je nach Bedarf kann die Anzeigevorrichtung 5 auch größer oder kleiner ausgeführt und mit mehr oder weniger Bedienelementen flankiert werden.

## Patentansprüche

1. Funkgerät (1), insbesondere Funktelefon, mit einer Anzeigevorrichtung (5) und mindestens einem Bedienelement (11,...,16) zur Auswahl und/oder Aktivierung von an der Anzeigevorrichtung (5) darstellbaren Funktionen des Funkgerätes (1), wobei das mindestens eine Bedienelement (11,...,16) der Anzeigevorrichtung (5) derart benachbart angeordnet ist, daß eine örtliche Zuordnung zwischen dem mindestens einen Bedienelement (11,...,16) und der Darstellung der Funktionen des Funkgerätes (1) an der Anzeigevorrichtung (5) besteht, **dadurch gekennzeichnet, daß** mindestens ein erster Betriebsmodus vorgesehen ist, in dem dem mindestens einen Bedienelement eine Information über diesen Betriebsmodus an der Anzeigevorrichtung zugeordnet ist, und daß die Information in einem dem ersten Betriebsmodus zugeordneten zweiten Betriebsmodus in eine durch das mindestens einen Bedienelement betätigbare Funktion zur Aktivierung des ersten Betriebsmodus umgewandelt wird.

2. Funkgerät nach Anspruch 1, **dadurch gekennzeichnet, daß** zwischen dem mindestens einen Bedienelement (11,...,16) und der Darstellung der zugeordneten Funktionen des Funkgerätes (1) an der Anzeigevorrichtung (5) Graphiksymbole, die vorzugsweise pfeilförmig ausgebildet sind, an der Anzeigevorrichtung (5) darstellbar sind.

3. Funkgerät (1) nach Anspruch 1 oder 2, **dadurch gekennzeichnet, daß** die Anzeigevorrichtung (5) rechteckförmig und an einer Gehäuseoberfläche (20) des Funkgerätes (1) angeordnet ist und daß an mindestens einer Seite der Anzeigevorrichtung (5) mindestens ein Bedienelement (11,...,16) angeordnet ist.

4. Funkgerät (1) nach Anspruch 1, 2 oder 3, **dadurch gekennzeichnet, daß** das mindestens eine Bedienelement (11,...,16) beleuchtbar ist.

5. Funkgerät (1) nach einem der vorherigen Ansprüche, **dadurch gekennzeichnet, daß** über das mindestens eine Bedienelement (11,...,16) Unterpunkte eines Bedienmenüs auswählbar und/oder aktivierbar sind.

6. Funkgerät (1) nach einem der vorherigen Ansprüche, **dadurch gekennzeichnet, daß** über das mindestens eine Bedienelement (11,...,16) Einträge eines im Funkgerät (1) angeordneten Telefonnummernspeichers auswählbar und/oder aktivierbar sind.

7. Funkgerät (1) nach einem der vorherigen Ansprüche, **dadurch gekennzeichnet, daß** ein Bedienfeld (25), vorzugsweise mit einer alphanumerischen Tastatur (30), vorgesehen ist und daß das mindestens eine Bedienelement (11,...,16) von dem Bedienfeld (25) abgesetzt ist.

8. Funkgerät (1) nach einem der vorherigen Ansprüche, **dadurch gekennzeichnet, daß** das mindestens eine Bedienelement (11,...,16) einem Randbereich der Gehäuseoberfläche (20) des Funkgerätes (1) benachbart angeordnet ist.

## Claims

1. Radio (1), particularly a radio telephone, having a display apparatus (5) and at least one control element (11, ..., 16) for selecting and/or activating functions of the radio (1) which can be displayed on the display apparatus (5), the at least one control element (11, ..., 16) being arranged adjacent to the display apparatus (5) such that there is a local association between the at least one control element (11, ..., 16) and the display of the functions of the radio (1) on the display apparatus (5), **characterized in that** at least one first mode of operation is provided in which the at least one control element has an associated piece of information about this mode of operation on the display apparatus, and **in that** in a second mode of operation, associated with the first mode of operation, the piece of information is converted into a function which can be operated by the at least one control element for the purpose of activating the first mode of operation.

2. Radio according to Claim 1, **characterized in that** graphics symbols, which are preferably in the form of arrows, can be displayed on the display apparatus (5) between the at least one control element (11, ..., 16) and the display of the associated functions of the radio (1) on the display apparatus (5).

3. Radio (1) according to Claim 1 or 2, **characterized in that** the display apparatus (5) is rectangular and is arranged on a housing surface (20) of the radio (1), and **in that** at least one control element (11, ..., 16) is arranged on at least one side of the display apparatus (5).

4. Radio (1) according to Claim 1, 2 or 3, **characterized in that** the at least one control element (11, ..., 16) can be illuminated.

5. Radio (1) according to one of the preceding claims, **characterized in that** the at least one control element (11, ..., 16) can be used to select and/or activate subitems in a control menu.

6. Radio (1) according to one of the preceding claims, **characterized in that** the at least one control element (11, ..., 16) can be used to select and/or activate entries in a telephone number store arranged in the radio (1).

7. Radio (1) according to one of the preceding claims, **characterized in that** a control panel (25), preferably with an alphanumeric keypad (30), is provided, and **in that** the at least one control element (11, ..., 16) is remote from the control panel (25).

8. Radio (1) according to one of the preceding claims, **characterized in that** the at least one control element (11, ..., 16) is arranged adjacent to an edge region of the housing surface (20) of the radio (1).

## Revendications

1. Appareil radio (1), en particulier radiotéléphone, comprenant un dispositif d'affichage (5) et au moins un élément de commande (11,...,16) pour la sélection et/ou l'activation de fonctions de l'appareil radio (1) pouvant être représentées sur le dispositif d'affichage (5), dans lequel au moins un élément de commande (11,...,16) est adjacent au dispositif d'affichage (5), de façon qu'il existe une association locale entre l'au moins un élément de commande (11,...,16) et la représentation des fonctions de l'appareil radio (1),
**caractérisé en ce que**
dans au moins un premier mode de fonctionnement, une information concernant ce mode de fonctionnement sur le dispositif d'affichage est associée à au moins un élément de commande, et l'information, dans un deuxième mode de fonctionnement associé au premier mode de fonctionnement, est transformée en une fonction actionnée par au moins un élément de commande pour activer le premier mode de fonctionnement.

2. Appareil radio selon la revendication 1,
**caractérisé en ce qu'**
entre au moins un élément de commande (11,...,16) et la représentation des fonctions associées de l'appareil radio (1) sur le dispositif d'affichage (5), des symboles graphiques qui sont conçus de préférence en forme de flèches peuvent être représentés sur le dispositif d'affichage (5).

3. Appareil radio (1) selon la revendication 1 ou 2,
**caractérisé en ce que**
le dispositif d'affichage (5) est rectangulaire et se trouve sur une face supérieure (20) du boîtier de l'appareil radio (1) et, sur au moins un côté du dispositif d'affichage (5), il est prévu au moins un élément de commande (11,...,16).

4. Appareil radio (1) selon la revendication 1, 2 ou 3,
**caractérisé en ce que**
l'au moins un élément de commande (11,...,16) est éclairable.

5. Appareil radio (1) selon l'une quelconque des revendications précédentes,
**caractérisé en ce que**
par l'intermédiaire d'au moins un élément de commande (11,...,16), des sous-points d'un menu de commande peuvent être sélectionnés et/ou activés.

6. Appareil radio (1) selon l'une quelconque des revendications précédentes,
**caractérisé en ce que**
par l'intermédiaire d'au moins un élément de commande (11,...,16), les données enregistrées dans une mémoire de numéros de téléphone disposée dans l'appareil radio (1) peuvent être sélectionnées et/ou activées.

7. Appareil radio (1) selon l'une quelconque des revendications précédentes,
**caractérisé en ce qu'**
il est prévu un champ de commande (25), de préférence avec un clavier alphanumérique (30), et au moins un élément de commande (11,...,16) est décalé par rapport au champ de commande (25).

8. Appareil radio (1) selon l'une quelconque des revendications précédentes,
**caractérisé en ce qu'**
au moins un élément de commande (11,...,16) est disposé de façon adjacente à une zone marginale de la face supérieure (20) du boîtier de l'appareil radio (1).
